# EUROPEAN PATENT APPLICATION

(11) **EP 2 559 874 A1**
(43) Date of publication of application: **20.02.2013**
(21) Application number: 10849789.2
(22) Date of filing: 16.04.2010
(51) Int. Cl.: F01N 3/24, F01N 3/20, F02B 37/007

(54) **EXHAUST GAS HEATING DEVICE FOR INTERNAL COMBUSTION ENGINE, AND METHOD FOR CONTROLLING SAME**

(71) Applicant: Toyota Jidosha Kabushiki Kaisha, Toyota-shi, Aichi 471-8571 (JP)
(72) Inventor: HAYAKAWA, Takeshi, Toyota-shi Aichi 471-8571 (JP)
(74) Representative: Intès, Didier Gérard André
(86) International application number: PCT/JP2010/002791
(87) International publication number: WO 2011/128950

(57) **Abstract**

An exhaust heating apparatus (37) according to the present invention, for heating exhaust being led to an exhaust emission purifier (30) from an internal combustion engine (10) in which a first exhaust turbocharger (28) and a second exhaust turbocharger (29) that is mainly used in a lower rotational speed range of the engine than the first turbocharger are incorporated, is arranged in a first exhaust passage (26f) that is located further upstream than a confluent portion (27c) of the first exhaust passage, which passes through an exhaust turbine (28b) of the first turbocharger and continues to the exhaust emission purifier, and a second exhaust passage (26s), which goes around the exhaust turbine of the first turbocharger and passes through an exhaust turbine (29b) of the second turbocharger and continues to the exhaust emission purifier, and further downstream than the exhaust turbine of the first turbocharger.

## Description

### Technical Field

The present invention reflates to an exhaust heating apparatus that increases a temperature of exhaust in order to activate an exhaust emission purifier and keep the exhaust emission purifier in an activated state in an internal combustion engine that is provided with the exhaust emission purifier.

### Background Art

A turbocharger that comparatively easily achieved an improvement in output from an internal combustion engine also has a tendency at the same time to bring about a drop in fuel efficiency. In recent years, in order to meet the strong demand for an improvement in the fuel efficiency of internal combustion engines in which this kind of turbocharger is incorporated, internal combustion engines in which two turbochargers having different characteristics are incorporated are proposed in Patent Literature 1 and Patent Literature 2. In either case, there are provided a first turbocharger that mainly functions in a low rotational speed range of the internal combustion engine, and a second turbocharger that mainly functions in rotational speed ranges other than that; and these turbochargers are arranged in series or parallel in the intake and Exhaust passages.

Meanwhile, coping with strict emission standards set on internal combustion engines has lead to a necessity for facilitating the activation of an exhaust gas purifying device at the start of its internal combustion engine, maintaining its active state during the operation of the internal combustion engine, and so on. In this respect, Patent Literature 1 and the like have proposed internal combustion engines in which an exhaust gas heating device is installed upstream of an exhaust gas purifying device in an Exhaust passage. This Exhaust gas heating device generates heating gas within exhaust gas and supplies this generated heating gas into the exhaust gas purifying device given at the downstream side to whereby facilitate the activation of the exhaust gas purifying device and maintain its active state. To do so, the Exhaust gas heating device generally includes a fuel supply valve which adds fuel into the exhaust passage, and an igniter such as a glow plug which heats and ignites the fuel to generate heating gas. Furthermore, there is also know an exhaust heating apparatus in which a compact oxidation catalyst is arranged in the exhaust passage further on the downstream side than the igniter in order to increase the temperature of the heated gas. This oxidation catalyst has a heat generation function of its own, and has a function for reforming fuel to a low-carbon component, however, has different structure than the oxidation catalyst that is used as part of the exhaust emission purifier.

### Citation List

### Patent Literature

- [Patent literature 1]: Japanese Patent Laid-Open No. 2008-255902
- [Patent literature 2]: Japanese Patent Laid-Open No. 2009-270470
- [Patent literature 3]: Japanese Patent Laid-Open No. 2006 -112401

### Summary of Invention

### Technical Problem

It is evident that in the future, an internal combustion engine that is able to achieve both good output characteristics and fuel efficiency and clean Exhaust will be important technology, and from this aspect, it has been considered that an exhaust heating apparatus is further incorporated in an internal combustion engine in which two-stage exhaust turbochargers as described above is incorporated.

In an Exhaust heating apparatus disclosed in Patent Literature 3, in the case of an operating state where an intake flow related to an internal combustion engine is large, a flow rate of exhaust that flows through an exhaust passage also relatively increases. Therefore, it is not possible for fuel that is supplied to the Exhaust passage from a fuel supply valve of the exhaust heating apparatus to remain around the igniter, and even when ignited, the flame is blown out by the flow of the exhaust, so there is a possibility that fuel that has not been combusted will flow toward the exhaust emission purifier side.

On the other hand, in the internal combustion engine in which the 2-stage exhaust turbochargers are incorporated, there is basically a tendency for an exhaust flow to become large Moreover, the exhaust passes through exhaust turbines of the two turbochargers, respectively, so a temperature of the exhaust greatly drops due to the release of the heat to the outside and a heat capacity of the exhaust turbines themselves. As a result, the troubles described above become even more prominent, and it may only be possible to actuate the exhaust heating apparatus when there is a small amount of exhaust flow, such as when a vehicle decelerates.

An object of the present invention is to provided an exhaust heating apparatus that is capable of stably and continuously igniting fuel in an internal combustion engine in which 2-stage exhaust turbochargers are incorporated.

A first aspect of the present invention is an exhaust heating apparatus for heating exhaust being led to an exhaust emission purifier from an internal combustion engine in which a first exhaust turbocharger and a second exhaust turbocharger are incorporated, the second turbocharger being mainly used in a lower rotational speed range of the engine than the first turbocharger, wherein the exhaust heating apparatus is arranged in a first exhaust passage that is located further upstream than a confluent portion of the first exhaust passage, which passes through an exhaust turbine of the first turbocharger and continues to the exhaust emission purifier, and a second exhaust passage, which goes around the exhaust turbine of the first turbocharger and passes through an exhaust turbine of the second turbocharger and continues to the exhaust emission purifier, and further downstream than the exhaust turbine of the first turbocharger.

In the present invention, the exhaust heating apparatus is operated in the case of an operating state where it is not necessary to lead exhaust gas to the first exhaust passage, for example, in the case where the internal combustion engine is in the low rotational speed range. The resulting heated gas is merged with the exhaust flowing in the second exhaust passage at a confluent portion of the first exhaust passage and second exhaust passage, and flows into the exhaust emission purifier.

In the exhaust heating apparatus for the internal combustion engine according to the present invention, the exhaust heating apparatus may include a fuel supply valve for supplying fuel to the first exhaust passage, and ignition means for igniting and burning fuel that was supplied from the fuel supply valve to the first exhaust passage. Also, an oxidation catalyst is advantageously arranged in the exhaust passage between the ignition means and the exhaust emission purifier.

The first exhaust passage and the second exhaust passage may be arranged in parallel between the engine and the exhaust emission purifier. In this case, a valve capable of adjusting a flow of exhaust that flows in the first exhaust passage may be arranged in the first exhaust passage further on the upstream side than the exhaust turbine of the first turbocharger. Furthermore, when fuel is supplied to the first exhaust passage from the fuel supply valve, an opening of the valve may be adjusted so that the flow of exhaust flowing in the first exhaust passage becomes less than a flow of exhaust that flows in the second exhaust passage.

Alternatively, the second exhaust passage may be a bypass that is arranged in parallel with respect to the first exhaust passage. In this case, a valve capable of adjusting a flow of exhaust that flows in the bypass may be arranged in the bypass. Also, when fuel is supplied to the first exhaust passage from the fuel supply valve, the opening of the valve may be adjusted so that the flow of exhaust that flows in the first exhaust passage becomes less than the flow of exhaust that flows in the bypass.

A second aspect of the present invention is a control method for the exhaust heating apparatus according to the first aspect of the present invention that the first exhaust passage and the second exhaust passage are arranged in parallel between the engine and the exhaust emission purifier and that a valve capable of adjusting a flow of exhaust that flows in the first exhaust passage is arranged in the first exhaust passage further on the upstream side than the exhaust turbine of the first turbocharger, or the exhaust heating apparatus according to the first aspect of the present invention that the second exhaust passage is a bypass that is arranged in parallel with respect to the first exhaust passage and that a valve capable of adjusting a flow of exhaust that flows in the bypass is arranged in the bypass, comprising the steps of detecting a rotational speed of the internal combustion engine, and flowing a predetermined amount of exhaust in the first exhaust passage and actuating the exhaust heating apparatus when the detected rotational speed of the engine is equal to or less than a predetermined rotational speed, or when in an operating state where the first exhaust passage can be closed.

In the present invention, when the internal combustion engine is in the low rotational speed range, or when it is in the operating state where the first exhaust passage could be closed, the exhaust heating apparatus is operated while a valve opening is adjusted to flow a predetermined flow of exhaust into the first exhaust passage. The resulting heated gas is merged with the exhaust flowing in the second exhaust passage at the confluent portion of the first exhaust passage and second exhaust passage, and flows into the exhaust emission purifier.

### Advantageous Effects of Intention

With the present invention, even in an internal combustion engine in which 2-stage exhaust turbochargers are incorporated, it is possible to stably actuate the exhaust heating apparatus not only at the time of decelerating but even at the time of accelerating or traveling at constant speed when the internal combustion engine is in the low rotational speed range. This is the same even when in the operating state where the first exhaust passage can be closed. The heated gas can be efficiently mixed with the exhaust gas flowing in the second exhaust passage at the confluent portion with the second exhaust passage.

when an oxidation catalyst is arranged in the exhaust passage between ignition means and the exhaust emission purifier, it is possible to further efficiently increase the temperature of the heated gas.

When a valve that is capable of adjusting a flow of exhaust that flows in the first exhaust passage is arranged in the first exhaust passage further on the upstream side than an exhaust turbine of a first exhaust turbine type turbocharger, as long as the internal combustion engine is in the low rotational speed range, it is possible to reliably actuate the exhaust heating apparatus. Particularly, when an opening of the valve is adjusted so that the flow of exhaust that flows in the first exhaust passage is less than a flow of exhaust that flows in the second exhaust passage, it is possible to more reliably generate stable heated gas.

Similarly, when a valve that is capable of adjusting a flow of exhaust that flows in a bypass is arranged in the bypass, as long as the internal combustion engine is in the low rotational speed range, it is possible to reliably actuate the exhaust heating apparatus. Particularly, when the opening of the value is adjusted so that the flow of exhaust that flows in the first exhaust passage is less than the flow of exhaust that flows in the bypass, it is possible to more reliably generate stable heated gas. Moreover, it is possible to use existing components that are incorporated in the 2-stags exhaust turbochargers as a bypass and valve.

### Brief Description of Drawings

FIG. 1 is a conceptual diagram of one embodiment, of an Exhaust heating apparatus for an internal combustion engine according to the present invention;
FIG. 2 is a control block diagram of main components in the embodiment illustrated in FIG. 1;
FIG. 3 is a graph expressing a relationship between the engine rpm and the turbine rpm;
FIG. 4 is a flowchart illustrating the control procedure for the exhaust heating apparatus of the embodiment illustrated in FIG. 1;
FIG. 5 is a conceptual diagram of another embodiment of an exhaust heating apparatus for an internal combustion engine according to the present invention; and
FIG. 6 is a flowchart illustrating a control procedure for the exhaust heating apparatus of the embodiment illustrated in FIG. 5.

### Description of Embodiments

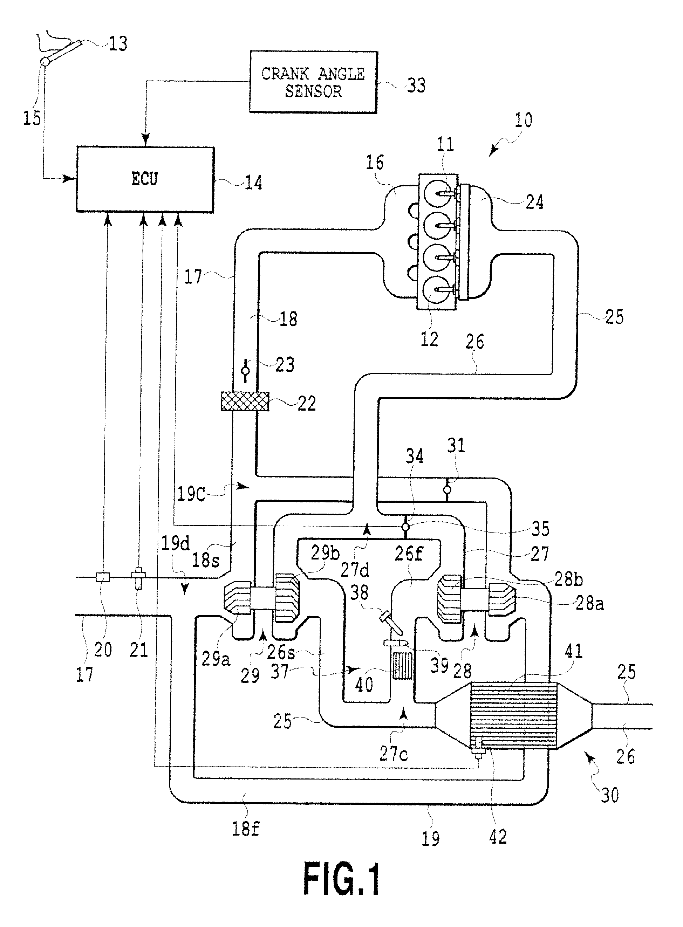

An embodiment in which the present invention is applied to a compression ignition type internal combustion engine in which parallel-type 2-stage Exhaust turbochargers are incorporated will be explained in detail with reference to FIGS. 1 to 4. The present invention is not, however, limited to the embodiment, and the construction thereof may be freely modified corresponding to required characteristics. The prevent invention is effectively applied to a spark ignition type internal combustion engine in which gasoline, alcohol, LNG (Liquefied Natural Gas) or the like is used as fuel to be ignited by a spark plug, for example.

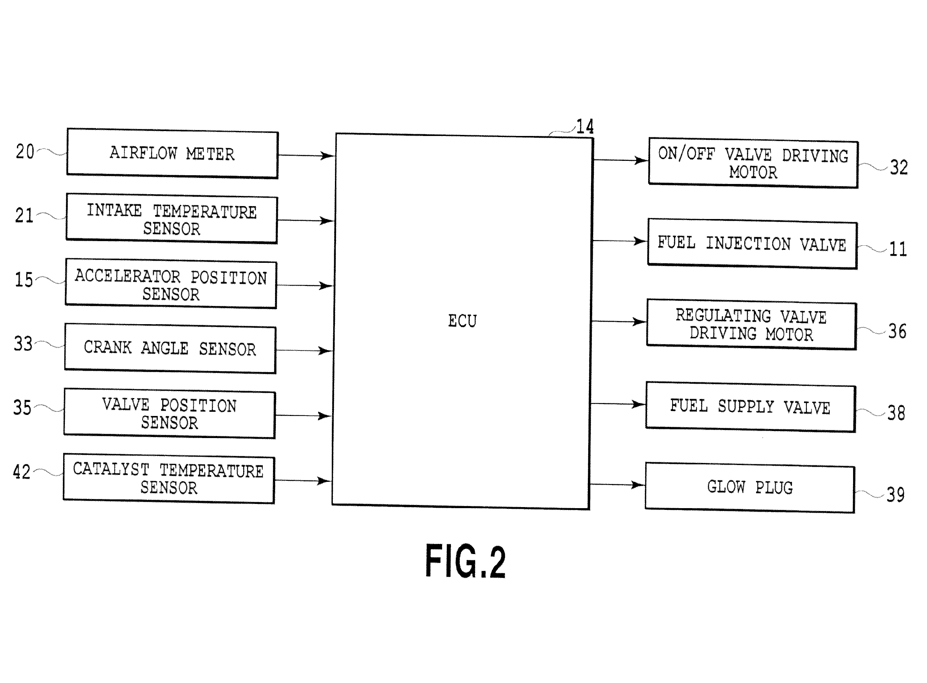

Main components of an engine, system of the embodiment, are illustrated schematically in FIG. 1, and a control block thereof is illustrated in FIG. 2, however, a valve mechanism for intake and exhaust, an EGR system, and the like are omitted for convenience. The engine 10 according to the present embodiment is a compression-ignition multicylinder (four cylinders in the embodiment shown in Fig. 1) internal combustion engine that spontaneously ignites light oil, biofuel, or a mixture thereof as a fuel by injecting the fuel directly into a combustion chamber 12 in a compressed state through a fuel injection valve 11. However, the engine 10 may be a single cylinder engine in connection with the characteristics of the present invention. The amount of fuel fed into the combustion chamber 12 through the fuel injection valve 11 as well as injection timing are controlled by an ECU (Electronic Control Unit) 14 based on the position of an accelerator pedal 13 pressed by a driver and the operating status of the vehicle. The amount that the accelerator pedal 13 is pressed is detected by an accelerator position sensor 15, and the detected information is outputted to an ECU 14 and used for setting an amount of fuel to be injected from a fuel injection value 11.

An intake pipe 17 that is connected to an engine 10 by way of an intake manifold 16, together with the intake manifold 16, defines an intake passage 18, and on the upstream side and downstream side of the intake pipe 17, has a branched portion 19d and a confluent portion 19c with respect to a branched intake pipe 19. In other words, both ends of the branched intake pipe 19 are connected to the intake pipe 17 by way of the branched portion 19d on the upstream side and the confluent portion 19c on the downstream side of the intake passage 18. That is to say, a portion of the intake pipe 17 that is located between the branched portion 19d on the upstream side the confluent portion 19c on the downstream side of the intake passage 18, and the branched intake pipe 19 are arranged in parallel. In the embodiment, a portion that is defined by the branched intake pipe 19 is conveniently called a first intake passage 18f, and a portion that is defined by the intake pipe 17 that is located between the branched portion 19d on the upstream side and the confluent portion 19c on the downstream side of the intake passage 18 is called a second intake passage 18s.

An airflow meter 20 and an intake temperature sensor 21 are attached to the intake pipe 17 further on the upstream side than the branched portion 19d on the upstream side of the intake passage 18, and information related to the intake flow and intake temperature that were detected by these is outputted to the ECU 14. The ECU 14 performs correction of the amount of fuel injection from the fuel injection valve 11 based on the information detected from the airflow meter 20 and the intake temperature sensor 21.

An intercooler 22 that cools the intake in order to increase a filled density of the intake that flows through the intake passage 18, and a throttle valve 23 for adjusting an opening of the intake passage 18 are provided in the intake pipe 17 further on the downstream side than the confluent portion 19c on the downstream side of the intake passage 18. The throttle valve 23 in the embodiment is mechanically linked to the position of the accelerator pedal 13 that is adjusted by the amount that the driver presses the accelerator pedal 13, however, it is of course possible to employ a throttle valve that can electrically correct the opening according to the operating state of the vehicle.

An exhaust pipe 25 that is connected to the engine 10 by way of an exhaust manifold 24, together with the exhaust manifold 24, defines an exhaust passage 26, and has a branched portion 27d and confluent portion 27c related to a branched exhaust pipe 27 on the upstream side and downstream side. In other words, both ends of the branched exhaust pipe 27 are connected to the exhaust pipe 25 at the branched portion 27d on the upstream side and the confluent portion 27c on the downstream side of the exhaust passage 26. That is to say, a portion of the exhaust pipe 25 that is located between the branched portion 27d on the upstream side and the confluent portion 27c on the downstream side of the exhaust passage 26, and the branched exhaust pipe 27 are arranged in a parallel state. In the embodiment, a portion that is defined by the branched exhaust pipe 27 corresponds to a first exhaust passage. 26f of the present invention. Moreover, a portion that is defined by the exhaust pipe 25 that is located between the branched portion 27d on the upstream side and the confluent portion 27c on the downstream side of the exhaust passage 26 corresponds to a second exhaust passage 26s in the present invention,

A first exhaust turbine type turbocharger (hereinafter, referred to as simply a turbocharger) 28 is arranged so as to span between the first intake passage 18f and first exhaust passage 26f, and the compressor 28a thereof being located in the first intake passage 18f, the exhaust turbine 28b is located in the first exhaust passage 26f. Moreover, a second turbocharger 29 that is mainly used in the low rpm range of the engine 10 more than the first turbocharger 28 is arranged so as to span between the second intake passage 18s and the second exhaust passage 26s. Together with a compressor 29a of the second turbocharger 29 being located in the second intake passage 18s, an exhaust turbine 29b thereof is located in the second exhaust passage 26s. Therefore, the second exhaust passage 26s that is branched off from the branched portion 27d on the upstream side goes around the exhaust turbine 18b of the first turbocharger 28, passes through the exhaust turbine 29b of the second turbocharger 29, and merges with the first exhaust passage 26f at the confluent portion 27c on the downstream side. An exhaust emission purifier 30 is connected to the exhaust pipe 25 that is located further downstream than the confluent portion 27c on the downstream side of the exhaust passage 26.

An intake on-off valve 31 for opening or closing the first intake passage 18f is arranged in the first intake passage 18f further on the downstream side than the compressor 28a of the first turbocharger 28. An on-off valve driving motor 32 is connected to the intake on-off valve 31, and the ECU 14 control the actuation of the on-off valve driving motor 32 according to the operating state of the vehicle, and switches the opening and closing operation of the intake on-off valve 31. Basically, when the engine speed, or in other words , the number of revolutions Nₙ per unit time of the engine is equal to or greater than the number of revolutions N_{R} (hereinafter, this will be referred to as fuel supply judgment speed) when the first turbocharger, begins to exert a supercharging ability, the intake on-off value 31 becomes completely open. On the other hand, when less than the fuel supply judgment speed N_{R} the intake on-off valve 31 is controlled so as to become completely closed. In order for this, a crank angle phase of the engine 10 is detected by a crank angle sensor 33, and that detection information is outputted to the ECU 14 , after which the ECRU 14 calculates the engine speed Nₙ based on the information from this crank angle sensor 33.

A flow regulating valve 34 that can adjust the flow of exhaust that flows in the first exhaust passage 26f is arranged in the first exhaust passage 26f further on the upstream side than the exhaust turbine 28b of the first turbocharger 28. moreover, a valve position sensor 35 for detecting the opening is connected to the flow regulating valve 34, and the detection information is outputted to the ECU 14. A regulating valve driving motor 36, whose actuation is controlled by the ECU 14, is also connected to the flow regulating valve 34, and the valve opening is adjusted based on the operating state of the vehicle and the detection information from the valve position sensor 35. When fuel f rom a fuel supply valve 38 of an exhaust heating apparatus 37 that will be described later is supplied to the first Exhaust passage 26f, the flow regulating valve 34 is controlled so that the amount of exhaust flowing in the first exhaust passage 26f becomes less than the amount of exhaust flowing in the second exhaust passage 26s. More specifically, the ECU 14, by way of the regulating valve driving motor 36, sets the opening of the flow regulating valve 34 so that exhaust flows in the first exhaust passage 26 at just a flow rate that the flame that is caused to occur inside the first exhaust passage 26f by the exhaust heating apparatus 37 does not go out. As a result, it is possible for a predetermined flow of exhaust by which the flame does not go out to flow in the first exhaust passage 26f, and it is possible to lead the heating gas that is obtained by the exhaust heating apparatus 37 to the exhaust emission purifier 30.

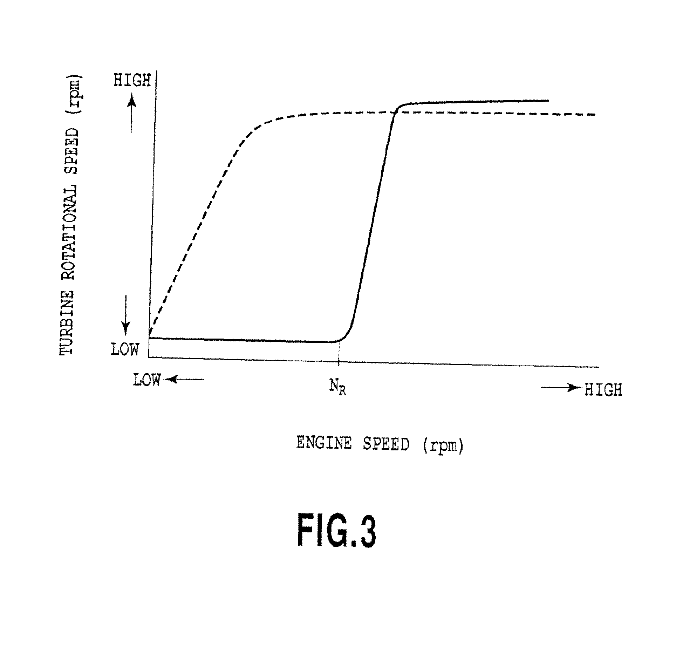

The characteristics of the first and second turbochargers 28, 29 in the embodiment are illustrated in FIG. 3. The first turbocharger 28, having a relatively large inertial mass, has hardly any supercharging ability in the range where the engine speed Nₙ are equal to or less than the fuel supply judgment speed N_{R}. On the other hand, the second turbocharger 29, having a relatively small inertial mass, exerts supercharging ability from the range of low engine speed where the first turbocharger 28 does not function. Therefore, when the engine speed Nₙ are equal to or less than the fuel supply judgment speed N_{R}, the ECU 14 basically maintains the intake on-off valve 31 and flow regulating valve 34 in the completely closed state, and allows intake and exhaust to flow through the second intake patch 18s and second exhaust passage 26s. However, when it is necessary to supply fuel from the fuel supply valve 38 to inside the first Exhaust passage 26f, the ECU 14 opens the flow regulating valve 34 a little so that part of the exhaust is led to the first exhaust passage 26f.

The exhaust heating apparatus 37 is arranged in the first exhaust passage 26f located further upstream than the confluent portion 27c of the first exhaust passage 26f and Second Exhaust passage 26s, and further downstream than the exhaust turbine 28b of the first turbocharger 28. This exhaust heating apparatus 37 is an apparatus for generating heated gas and supplying that heated gas to the exhaust emission purifier 30 located on the downstream side, and for activating and maintaining the activated state of that exhaust emission purifier 30. The exhaust heating apparatus 37 in the embodiment is provided in order from the upstream side with the fuel supply valve 38, and a glow plug 39 that is used for ignition means in the present invention. In the embodiment, the first exhaust passage 26f and an auxiliary oxidation catalyst 40 are provided in that order from the upstream side between the glow plug 39 and confluent portion 27c.

The fuel supply valve 38 is for supplying fuel into the first exhaust passage 26f, and the ECU 14 controls a supply timing and a supply amount based on the whether or not the exhaust emission purifier 30 is in the activated state and on the operating state of the vehicle.

The glow plug 39 is for igniting the fuel that is supplied from the fuel supply valve 38 into the first exhaust passage 26f. A direct-current power supply and a booster circuit (not illustrated in the figure) are connected to the glow plug 39 in order to supply power thereto, and a surface temperature of the glow plug 39 is controlled by the ECU 14. Instead of a glow plug 39, it is also possible to use a ceramic heater or the like as a method of ignition of the present invention.

The operation of supplying fuel from the fuel supply valve 38 into the first exhaust passage 26f, and heating of the glow plug 39 are basically only performed when the engine speed Nₙ are equal to or less than the fuel supply judgment speed N_{R}, and when the exhaust emission purifier 30 is in the non-activated, state. However, as long as the operating state is such that it is not necessary to lead exhaust to the first exhaust passage 26f, or in other words, when it is not necessary to make the first turbocharged 28 to function, it is possible to actuate the exhaust heating apparatus 37 with no problem. Moreover, when the exhaust emission purifier 30 and the auxiliary oxidation catalyst 40 are activated, it is possible to actuate the exhaust heating apparatus 37 as necessary even when the engine speed Nₙ are equal to or greater than the fuel supply judgment speed N_{R}, or even when the operating state is such that exhaust is led to the first exhaust passage 26f and the first turbocharger 28 is made to function.

The auxiliary oxidation catalyst is arranged in the exhaust passage 26 between the glow plug 39 and the exhaust emission purifier 30. In the embodiment, this auxiliary oxidation catalyst 40 is arranged in the exhaust passage 26f further on the upstream side than the confluent portion 27c, however, it also could be arranged in the Exhaust passage 26 further on the downstream side than the confluent portion 27c. The auxiliary oxidation catalyst 40 has a cross-sectional area that is less than a cross-sectional area of the first exhaust passage 26f, so part of the exhaust can pass without passing through the auxiliary oxidation catalyst 40. In other worlds, a flow rate of the exhaust that passes through the auxiliary oxidation catalyst 40 is lower than a flow rate of the exhaust that does not pass through it, so it is possible to further raise a temperature of the exhaust that passes through the auxiliary oxidation catalyst 40. When a temperature of the auxiliary oxidation catalyst 40 is sufficiently high, or in other words, in the activated state, power to the glow plug 39 is cut, so it is also possible to directly burn the fuel-air mixture inside the auxiliary oxidation catalyst 40. However, when the auxiliary oxidation catalyst 40 is not activated, such as at the time of the cold start of the engine 10, it is necessary to supply power to the glow plug 39. When the temperature of the auxiliary oxidation catalyst 40 becomes high, hydrocarbon having a large carbon number in the unburned mixture are broken down and reformed into hydrocarbons having a small carbon number and high reactivity. That is to say, the auxiliary oxidation catalyst 40 on one hand functions itself as a rapid heating element that heats at high speed, and on the other hand, also functions as a fuel reforming catalyst that generates reformed fuel.

In this way, heated gas is generated in the first exhaust passage 26f, and the high-temperature exhaust is then pasted through the auxiliary oxidation catalyst 40 and the temperature is further raised, and the unburned gas is either burned by the auxiliary oxidation catalyst 40, or is reformed to highly active hydrocarbon. Then, at the confluent portion 27c, these are mixed with the exhaust that is flowing in the second exhaust passage 26s and supplied to the exhaust emission purifier 30. As a result, it is possible to quickly activated and maintain the activated state of the exhaust emission purifier 30. Particularly, this exhaust heating apparatus 37 is extremely useful for improving the so-called cold emission state immediately after the cold start of the engine 10.

In order to increase the ignitability of the fuel that is injected from the fuel supply valve 38 into the first exhaust passage 26f, providing a plate shaped vaporization promotion member that faces the fuel supply valve 38 and glow plug 39 is effective. This vaporization promotion member has a function of scattering and atomizing fuel, or in other worlds promoting vaporization of fuel by colliding with fuel that is injected from the fuel supply valve 38.

The exhaust emission purifier 30 is for detoxifying the toxic material that is generated by burning the fuel-air mixture inside the combustion chamber 12. The exhaust emission purifier 30 in the embodiment is provided in order from the upstream side of the exhaust passage 26 with an oxidation catalyst 41, a three-way catalyst and a Nox catalyst, however, for convenience, only the oxidation catalyst 41 that is arranged on the most upstream end side is illustrated. In this oxidation catalyst 41, incorporated is a catalyst temperature sensor 42 that detects a burner temperature ana outputs that to the ECU 14.

The ECU 14 controls the flow regulating valve 34 and the exhaust heating apparatus 37, or in other words, controls the actuation of the fuel supply valve 38 and glow plug 39 according to a preset program and based on the operating state of the vehicle and a detection signal from the catalyst temperature sensor 42. In the embodiment, when, based on the detection signal from the catalyst temperature sensor 42, a catalyst element temperature Tₙ is equal to or less than a T_{R} as an activation index, it is determined that the exhaust emission purifier is not activated. When the engine speed Nₙ are less than the fuel supply judgment speed N_{R} at which the first turbocharger 28 does not exert supercharging ability, the flow regulating valve 34 is maintained in a state of being open a little, and part of the exhaust is also led to the first exhaust passage 26f. Electric power is then supplied to the glow plug 39 and fuel is supplied from the fuel supply valve 38, and the temperature of the exhaust that passes the exhaust turbine 28b of the first turbocharger 28 is raised. However, when the catalyst element temperature Tₙ exceeds the activation judgment temperature T_{R}, it is determined that the exhaust emission purifier 30 is activated, so the supply of fuel from the fuel supply valve 38 is stopped, and the power to the glow plug 39 is cut. Moreover, when the engine speed Nₙ are equal to or greater than the fuel supply judgment speed N_{R}, at which the first turbocharger 28 exerts a supercharging ability, the intake on-off valve 31 and the flow regulating valve 34 are maintained in the completely open state to allow the first turbocharger 28 to exert a supercharging effect. In this case, even when fuel is supplied from the fuel supply valve 38 into the first exhaust passage 26f and ignited by the glow plug 39, the flow rate of the exhaust that is flowing in the first exhaust passage 26f is high, so there is a high possibility that the flame will go out. Therefore, in this case, the exhaust heating apparatus 37 is not allowed to be actuated.

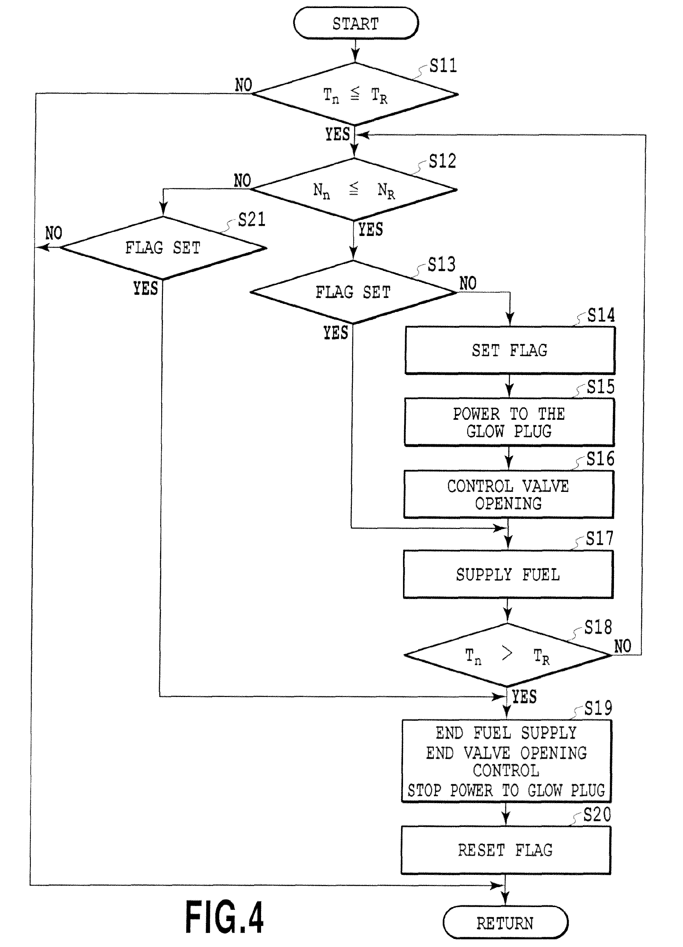

Such a control procedure of the exhaust heating apparatus 37 is illustrated in a flow chart in FIG. 4. In other words, in step S11 it is determined whether or not the temperature Tₙ of the oxidation catalyst 41 that is detected by the catalyst temperature sensor 42 is equal to or less than the activation judgment reference temperature T_{R}. Here, when it is determined that the temperature Tₙ of the oxidation catalyst 41 is equal to or less than the activation judgment reference temperature T_{R}, or in other words, when it is determined that the oxidation catalyst 41 is in the non-activated state, processing moves to step S12 and determines whether or not the engine speed Nₙ are equal to or greater than the fuel supply judgment speed N_{R}. Here, when it is determined that the engine speed Nₙ are equal to or less than the fuel supply judgment speed N_{R}, or in other words, when it is determined that the first turbocharger 28 does not exert any supercharging ability, processing moves to step S13, and determines whether or not a flag is set. At first, the flag is not set, so processing moves to step S14 and sets the flag, then in step S15 electric power is supplied to the glow plug 39. Furthermore, in step S16 the opening of the flow regulating valve 34 is adjusted so that part of the exhaust flows a little through the first exhaust passage 26f, then in step S17, fuel is injected from the fuel supply valve 38 into the first exhaust passage 26f. As a result, fuel is ignited in the first exhaust passage 26f where a little exhaust is flowing, and a temperature of the heated gas that is obtained is further raised by the auxiliary oxidation catalyst 40. Then, at the confluent portion with the second exhaust passage 26s, the gas is mixed with the exhaust that flows from here, and is led to the exhaust emission purifier 30, which raises the temperature of the exhaust emission purifier 30.

Next, in step S18, it is determined whether or not the temperature Tₙ of the oxidation catalyst 41 is greater than the activation judgment reference temperature T_{R}. Here, when it is determined that the temperature Tₙ of the oxidation catalyst 41 is greater than the activation judgment reference temperature T_{R}, or in other words, when it is determined that the oxidation catalyst is activated, processing moves to step S19 and together with stopping the supply of fuel from the fuel supply valve 38, stops opening control of the flow adjustment value 34. Then, depending on the engine speed Nₙ, the flow regulating valve 34 is switched to the completely closed state or completely open state. Furthermore, after the power to the glow plug 39 is stopped, processing moves to step S20, resets the f lag, and ends this series of control.

In step S18, when it is determined that the temperature Tₙ of the oxidation catalyst 41 is equal to or less than the activation judgment reference temperature T_{R}, or in other words, when it is determined that the oxidation catalyst 41 is not yet activated, processing returns to step S12. Then it is determined whether or not the engine speed Nₙ are equal to or less than fuel supply judgment speed N_{R}, and only when the engine speed Nₙ are equal to or less than the fuel supply judgment speed N_{R}, fuel is continuously supplied to the first exhaust passage 26f, and the oxidation catalyst 41 is activated. In step S13, the flat is set, or in other words, when it is determined that this is the second time or later that fuel is supplied from the fuel supply valve 38, processing moves to step S17 and the supply of fuel continues.

In step S12, when the number of engine speed exceeds the fuel supply judgment speed N_{R}, or in other words, when the first turbocharger 28 is determined to be in a supercharging state, processing moves to step S21 and determines whether or not the flag is set. Here, the flag is set, or in other words, when it is determined that this is the second time or later that fuel has been supplied from the fuel supply valve 38, processing moves to step S19 and stops the supply of fuel from the fuel supply valve 38. Furthermore, opening control of the flow adjustment value 34 is stopped, and the flow regulating valve 34 is switched to the completely open state. When the engine speed Nₙ exceed the fuel supply judgment speed N_{R}, the intake opening and cloying value 31 is also switched to the completely open state.

In step S21, when it is determined that the flag is not set, or in other words, when it is determined that fuel is not being supplied from the fuel supply value 38, the control flow ends without doing anything. Moreover, in step S11, the same occurs when the temperature Tₙ of the oxidation catalyst 41 exceeds the activation judgment reference temperature T_{R}, or in other words, when it is determined that the oxidation catalyst 41 is activated.

In the embodiment described above, when the engine speed Nₙ are equal to or less than the fuel supply judgment speed N_{R}, fuel is supplied to the first Exhaust passage 26f. However, in the case of the operating state where the flow regulating valve 34 is closed so that exhaust cannot flow through the first exhaust passage 26f, it is also possible to perform control so that fuel is supplied to the first exhaust passage 26f. In this case, preferably, the flow regulating valve 34 is open a little and exhaust is led to the first exhaust passage 26f.

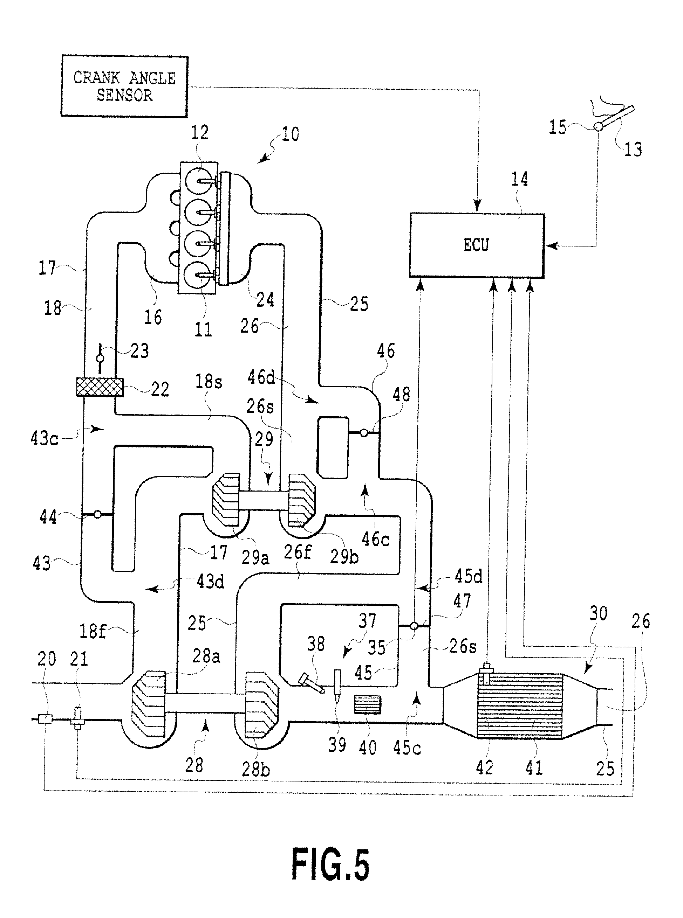

The present invention can also be applied to an engine system wherein the first and second turbochargers 28, 29 described above are arranged in series with respect to the exhaust passage 26. Another embodiment of the present invention is schematically illustrated in FIG. 5, and the same reference numbers will be used for elements having identical functions as those in the previous embodiment, however any redundant explanations will be omitted. In other words, the intake pipe 17 that defines the intake passage 18 has a branched portion 43d and a confluent portion 43c related to an intake bypass pipe 43 on the upstream side and downstream side of the intake pipe 17. That is, both ends of the intake bypass pipe 43 are connected to the intake pipe 17 by the branched portion 43d on the upstream side and the confluent portion 43d on the downstream side of the intake passage 18. That is to say, a portion of the intake pipe 17 that is located between the branched portion 43d on the upstream side and the confluent portion 43c on the downstream side of the intake passage 18, and the intake bypass pipe 43 are arranged in parallel. In the embodiment, the intake passage 18 that is further on the upstream side than the intake bypass pipe 43 is for convenience called the first intake passage 18f. Moreover, a portion that is defined by the intake pipe 17 that is located between the branched portion 43d can the upstream side and the confluent portion 43c on the downstream side of the intake passage 18 is called the second intake passage 18s.

In the middle of the intake bypass pipe 43, an intake bypass valve 44 for opening and closing the intake bypass pipe 43 is attached, and that opening and closing operation is controlled by the ECU 14 by way of an intake bypass driving motor (not illustrated in the figure) according to the operating state of the vehicle.

The exhaust pipe 25 that defines the intake passage 18 has a branched portion 45d and a confluent portion 45c related to a first exhaust bypass pipe 45 on the upstream side and the downstream side of the exhaust pipe 25. In other words, both ends of the first exhaust bypass pipe 45 are connected to the exhaust pipe 25 by the branched portion 45d on the upstream side and the confluent portion 45c on the downstream side of the exhaust passage 26. That is to say, a portion of the exhaust pipe 25 that is located between the branched portion 45d on the upstream side and the confluent portion 45c on the downstream side of the exhaust passage 26, and the first exhaust bypass pipe 45 are arranged in a parallel state. The exhaust emission purifier 30 is connected to the exhaust pipe 25 that is located further on the downstream side than the first exhaust bypass pipe 45. The exhaust pipe 25 that is located even further on the upstream side than the first exhaust bypass pipe 45 further has a branched portion 46d and a confluent portion 46c related to a second exhaust bypass pipe 46 on the upstream side and the downstream side of the exhaust pipe 25. In other words, both ends of the second exhaust bypass pipe 46 are connected to the exhaust pipe 25 at the branched portion 46d on the upstream side and the confluent portion 46c on the downstream side of the exhaust passage 26. That is to say, a portion of the exhaust pipe 25 that is located between the branched portion 46d on the upstream side and the confluent portion 46c on the downstream side of the exhaust passage, 26, and the second exhaust bypass pipe 46 are arranged in a parallel state. In the embodiment, a portion that is refined by the exhaust pipe 25 that is located between the branched portion 45d on the upstream side and the confluent portion 45c on the downstream side related to the first exhaust bypass pipe 45 corresponds to the first exhaust passage 26f in the present invention. Moreover, a portion of the exhaust pipe 25 from the branched portion 46d related to the second exhaust bypass pipe 46 to the branched portion 45d related to the first exhaust bypass pipe 45 corresponds to the second exhaust passage 26s in the present invention.

The first turbocharger 28 is arranged so as to span between the first intake passage 18f and the first exhaust passage 26f, together with the compressor 28a thereof being located in the first intake passage 18f and the exhaust turbine 28b being located in the first exhaust passage 26f. Moreover, the second turbocharger 29 that is mainly used in a lower rotational speed range of the engine 10 than the first turbocharger 28 is arranged so as to span between the second intake passage 18s and the second exhaust passage 26s. The compressor 29a of this second turbocharger 29 is located in the second intake passage 18s, and the exhaust turbine 29b thereof is located in the second exhaust passage 26s between the branched portion 46d and the confluent portion 46c related to the second bypass pipe 46. Therefore, the exhaust passage 26s that passes through the exhaust turbine 29b of the second turbocharger 29 goes around the exhaust turbine 28b of the first turbocharger 28 by way of the first exhaust bypass pipe 45, and merges with the first exhaust passage 26f at the confluent portion 45c on the downstream side.

The exhaust heating apparatus 37 is incorporated in the second exhaust passage 26s further on the downstream side than the exhaust turbine 28b of the first turbocharger 28 and further on the upstream side than the confluent portion 45c that merges with the first exhaust bypass pipe 45. Moreover, the exhaust emission purifier 30 is arranged in the exhaust passage 26 further on the downstream side than the confluent portion 45c that merges with the first exhaust bypass pipe 45.

A first exhaust bypass valve 47 and a second exhaust bypass value 48 are incorporated in the first exhaust bypass pipe 45 and the second exhaust bypass pipe 46, and make it possible to open and close these pipes. The opening and closing operation of these valves is controlled by the ECU 14 by way of a first exhaust bypass valve driving motor and a second exhaust bypass valve driving motor (not illustrated in the figure). In the embodiment, an opening of the first exhaust bypass valve 47 can be controlled so that part of the exhaust flows inside the second exhaust passage 26s, and in order for this, a valve position sensor 35 is attached to the first exhaust bypass valve 47. In other words, the first exhaust bypass value 47 corresponds to the flow regulating valve 34 in the previous embodiment.

Therefore, when fuel is supplied from the fuel supply valve 38 to the first exhaust passage 26f, the opening of the first exhaust bypass valve 47 is controlled so that the flow of exhaust that flows through the first exhaust passage 26f is less than the flowof exhaust that flows through the second exhaust passage26s. More specifically, the openingof the first exhaust bypass valve 47 is controlled by the ECU 14 by way of the first exhaust bypass valve driving motor so that exhaust flows through the first exhaust passage 26f at just enough of a flow rate so that the flame that is caused to occur in the first exhaust passage 26f by the exhaust heating apparatus 37 does not go out.

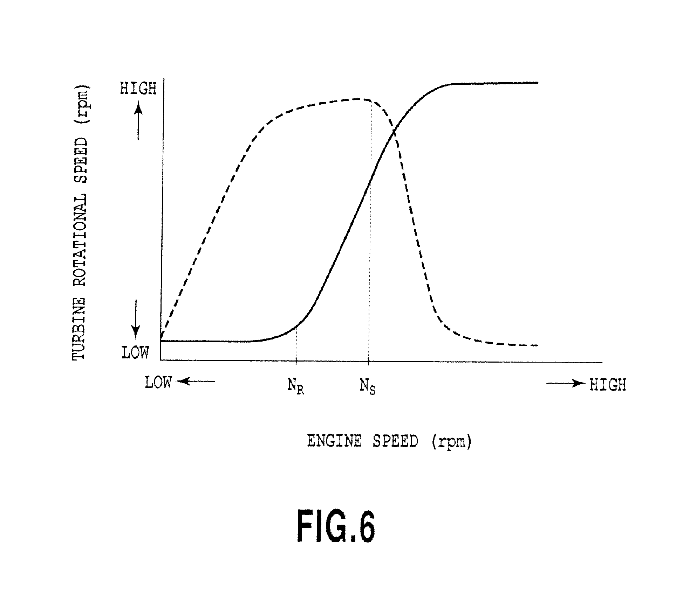

The characteristics of the first and second turbochargers 28, 29 of the embodiment, are illustrated in FIG. 6. The first turbocharger 28 that has a relatively large inertial has hardly any supercharging ability in the range where the engine, speed Nₙ are equal to or less than the fuel supple judgment speed N_{R}. However, the second turbocharger 29 that a relatively small inertial mass exerts supercharging ability from the range of low engine where the first turbocharger, 28 does not function. Therefore, when the engine speed Nₙ are equal to or less than the fuel supply judgment speed N_{R}, the ECU 14 basically maintains the intake bypass valve 44 and the second exhaust bypass valve 48 in the completely closed state, and maintains the first exhaust bypass valve 47 in the completely open state. Moreover, when the engine speed Nₙ are greater than the fuel supply judgment speed N_{R}, the ECU 14 keeps the second exhaust bypass valve 48 in the completely closed state. Furthermore, when the engine speed Nₙ are greater than a second turbocharged judgment speed NS, the ECU 14 keeps the intake bypass valve 44 and second exhaust bypass valve 48 in the completely open state, and suppresses supercharging by the second turbocharger 29.

When it is necessary to supply fuel from the fuel supply valve 38 into the first exhaust passage 26f, the first exhaust bypass valve 47 is closed a little from the completely open state, and part of the exhaust is led to the first exhaust passage 26f. However, this operation is executed only when the first exhaust bypass valve 47 in the range where the engine speed Nₙ are equal to or less than the fuel supply judgment speed N_{R} is in the completely open state. As a result, fuel that is injected into the first exhaust passage 26f from the fuel supply valve 38 is ignited by the glow plug 39, and without the flame going out, becomes heated gas and at the confluent portion 45c that merges with the first exhaust bypass pipe 45, is mixed with the exhaust that flows from the second exhaust passage 26s. This promotes activation of the Exhaust emission purifier 30.

As described above, when there is no problem even though fuel injected from the fuel supply valve 38 may go out inside the first exhaust passage 26f, care must be taken in that the exhaust heating apparatus 37 can be actuated in an arbitrary operating state.

It is to be noted that the present invention shall be construed solely from the matters described in the claims thereof, and the foregoing embodiment includes not only the matters described above but any changes and corrections encompassed by the concept of the present invention. In other words, all the matters in the foregoing embodiment are not to limit the present invention, but include any configurations which may not be directly related to the present invention and can be changed optionally depending up on the application, purpose, and the like.

### Reference Signs List

- 10: Engine
- 11: Fuel injection valve
- 12: Combustion chamber
- 13: Accelerator pedal
- 14: ECU
- 15: Accelerator position sensor
- 16: Intake manifold
- 17: Intake pipe
- 18: Intake passage
- 18f: First intake passage
- 18s: Second intake passage
- 19: Branched intake pipe
- 19d: Branched portion
- 19c: Confluent portion
- 20: Airflow meter
- 21: Intake temperature sensor
- 22: Intercooler
- 23: Throttle valve
- 24: Exhaust manifold
- 25: Exhaust pipe
- 26: Exhaust passage
- 26f: First exhaust passage
- 26s: Second exhaust passage
- 27: Branched exhaust pipe
- 27d: Branched portion
- 27c: Confluent portion
- 28: First turbocharger
- 28a: Compressor
- 28b: Exhaust turbine
- 29: Second turbocharger
- 29a: Compressor
- 29b: Exhaust turbine
- 30: Exhaust emission purifier
- 31: Intake on-off valve
- 32: On-off valve driving motor
- 33: Crank angle sensor
- 34: Flow regulating valve
- 35: Valve position sensor
- 36: Regulating valve driving motor
- 37: Exhaust heating apparatus
- 38: Fuel supply valve
- 39: Glow plug
- 40: Auxiliary oxidation catalyst
- 41: Oxidation catalyst
- 42: Catalyst temperature sensor
- 43: Intake bypass pipe
- 43d: Branched portion
- 43c: Confluent portion
- 44: Intake bypass valve
- 45: First exhaust bypass pipe
- 45d: Branched portion
- 45c: Confluent portion
- 46: Second exhaust bypass pipe
- 46d: Branched portion
- 46c: Confluent portion
- 47: First exhaust bypass value
- 48: Second exhaust bypass valve
- Nₙ: Engine speed
- N_{R}: Fuel supply judgment speed
- N_{S}: Second turbocharger stop judgment speed
- Tₙ: Catalyst element temperature
- T_{R}: Activation judgment temperature

## Claims

1. An exhaust heating apparatus for heating exhaust being led to an exhaust emission purifier from an internal combustion engine in which a first exhaust turbocharger and a second exhaust turbocharger are incorporated, the second turbocharged being mainly used in a lower rotational speed range of the engine than the first turbocharger, therein
the exhaust heating apparatus is arranged in a first exhaust passage that is located further upstream than a confluent portion of the first exhaust passage, which passes through an exhaust turbine of the first turbocharger and continues to the exhaust emission purifier, and a second exhaust passage, which goes around the exhaust turbine of the first turbocharger and passes through an exhaust turbine of the second turbocharger and continues to the exhaust emission purifier, and further downstream than the exhaust turbine of the first turbocharger.

2. The exhaust heating apparatus for the internal combustion engine as claimed in claim 1, wherein the exhaust heating apparatus includes a fuel supply valve for supplying fuel to the first exhaust passage , and ignition means for igniting and burning fuel that was supplied from the fuel supply, valve to the first exhaust passage.

3. The exhaust heating apparatus for the internal combustion engine as claimed in claim 2, wherein an oxidation catalyst is arranged in the exhaust passage between the ignition means and the exhaust emission purifier.

4. The exhaust heating apparatus for the internal combustion engine as claimed in claim 2 or 3, wherein the first exhaust passage and the second exhaust passage are arranged in parallel between the engine and the exhaust emission purifier.

5. The exhaust heating apparatus for an internal combustion engine as claimed in claim 4, wherein a valve capable of adjusting a flow of exhaust that flows in the first exhaust passage is arranged in the first exhaust passage further on the upstream side than the exhaust turbine of the first turbocharger.

6. The exhaust heating apparatus for an internal combustion engine as claimed in claim 5, wherein when fuel is supplied to the first exhaust passage from the fuel supply valve, an opening of the valve is adjusted so that the flow of exhaust flowing in the first exhaust passage becomes less than a flow of exhaust that flows in the second exhaust passage.

7. The exhaust heating apparatus for an internal combustion engine as claimed in claim 2 or 3, wherein the second exhaust passage is a bypass that is arranged in parallel with respect to the first exhaust passage.

8. The exhaust heating apparatus for an internal combustion engine as claimed in claim 7, wherein a valve capable of adjusting a flow of exhaust that flows in the bypass is arranged in the bypass.

9. The exhaust heating apparatus for an internal combustion engine as claimed in claim 8, wherein when fuel is supplied to the first exhaust passage from the fuel supply valve, the opening of the valve is adjusted so that the flow of exhaust that flows in the first exhaust passage less than the flow of exhaust that flows in the bypass.

10. A control method for the exhaust heating apparatus as claimed in claim 5 or 8, comprising the steps of:
detecting a rotational speed of the internal combustion engine; and
flowing a predetermined amount of exhaust in the first exhaust passage and actuating the exhaust heating apparatus when the detected rotational speed of the engine is equal to or less than a predetermined rotational speed, or when in an operating state where the first exhaust passage can be closed.
